# FASCICULE DE BREVET EUROPEEN

(11) **EP 1 863 676 B1**
(45) Date de publication et mention de la délivrance du brevet: **07.11.2018**
(21) Numéro de dépôt: 06726077.8
(22) Date de dépôt: 13.03.2006
(51) Int. Cl.: B60R 19/12

(54) **TRAVERSE DE PARE-CHOCS POUR VEHICULES AUTOMOBILES, PRESERVANT LES PIETONS**
STOSSSTANGE-QUERTRÄGER FÜR KRAFTFAHZEUGE MIT FUSSGÄNGERSCHUTZFUNKTION
MOTOR VEHICLE BUMPER BEAM FOR PEDESTRIAN PROTECTION

(30) Priorité: 30.03.2005 FR 0503090
(43) Date de publication de la demande: 12.12.2007
(73) Titulaire: ArcelorMittal Tubular Products Vitry, 51300 Vitry le François (FR)
(72) Inventeur: CHRETIEN, Jean-Michel, F-51250 Cheminon (FR); COCU, Arnaud, F-59144 Gommegnies (FR); COLMONT, Jean-Louis, F-95800 Cergy Saint-Christophe (FR); DERCHU, Thierry, F-55000 Bar le Duc (FR)
(74) Mandataire: Lavoix
(86) Numéro de dépôt international: PCT/FR2006/000548
(87) Numéro de publication internationale: WO 2006/103326

(56) Documents cités:
- EP-A- 0 926 048
- EP-A- 1 065 108
- WO-A-00/46074
- WO-A-93/04897
- DE-A1- 19 849 358
- US-A1- 2001 054 827
- US-A1- 2002 053 805
- US-A1- 2004 094 975

## Description

L'invention concerne une poutre ou traverse, en particulier pour pare-chocs de véhicules automobiles.

Le document US 2004/094975 décrit une traverse ou poutre pour pare-chocs de véhicules automobiles.

En matière de sécurité automobile, l'un des objectifs majeurs est de préserver les piétons, en cas de choc avec l'avant d'un véhicule. Un tel "choc piéton" peut notamment survenir entre la partie basse du pare-chocs avant et la jambe du piéton. De nouvelles normes européennes sont actuellement établies sur le sujet. On en verra plus loin le détail. Elles impliquent que soient trouvées des solutions techniquement et économiquement satisfaisantes, qui vérifient l'objectif de ces normes, à court terme, et, autant que possible, à moyen terme, c'est-à-dire sur la durée de carrière d'un modèle de véhicule.

La présente invention ouvre la voie à de telles solutions.

De façon générale, la traverse proposée est principalement constituée d'une structure tubulaire dont la section droite est conformée sur une partie au moins de sa longueur, afin d'ajuster la loi de variation de l'inertie.

Dans un mode de réalisation, cette conformation comprend, à partir de positions choisies situées de part et d'autre de sa partie centrale, un repli sur elle-même de la structure tubulaire, lequel repli s'accentue lorsque l'on va vers les extrémités.

D'autres caractéristiques et avantages de l'invention, apparaîtront à l'examen de la description détaillée ci-après, et de dessins annexés, sur lesquels:
- la figure 1 est un schéma en vue de côté illustrant une structure connue de géométrie avant de véhicule ;
- la figure 2A est une vue de dessous d'une traverse selon un premier mode de réalisation de l'invention ;
- la figure 2B est une vue arrière (côté véhicule) de la traverse de la figure 2A ;
- la figure 2C est une vue de dessus de la traverse de la figure 2A ;
- la figure 2D est une coupe transversale de la traverse de la figure 2A selon sa ligne de coupe C-C;
- la figure 2E est une coupe transversale de la traverse de la figure 2A selon sa ligne de coupe A-A;
- la figure 2F est une coupe transversale de la traverse de la figure 2A selon sa ligne de coupe B-B;
- la figure 2G est une vue agrandie de la moitié droite de la figure 2A;
- la figure 3A est une vue de dessous d'une traverse selon un second mode de réalisation de l'invention ;
- la figure 3B est une vue arrière (côté véhicule) de la traverse de la figure 3A ;
- la figure 3C est une vue de dessus de la traverse de la figure 3A ;
- la figure 3D est une coupe transversale de la traverse de la figure 3A selon sa ligne de coupe A-A;
- la figure 3E est une coupe transversale de la traverse de la figure 3A selon sa ligne de coupe B-B;
- la figure 3F est une coupe transversale de la traverse de la figure 3A selon sa ligne de coupe C-C;
- la figure 3G est une vue agrandie de la moitié droite de la figure 3A;
- la figure 4A est une vue de dessous d'une traverse selon un troisième mode de réalisation de l'invention ;
- la figure 4B est une vue arrière (côté véhicule) de la traverse de la figure 4A ;
- la figure 4C est une vue de dessus de la traverse de la figure 4A ;
- la figure 4D est une coupe transversale de la traverse de la figure 4A selon sa ligne de coupe A-A;
- la figure 4E est une coupe transversale de la traverse de la figure 4A selon sa ligne de coupe B-B;
- la figure 4F est une coupe transversale de la traverse de la figure 4A selon sa ligne de coupe C-C;
- la figure 4G est une coupe transversale de la traverse de la figure 4A selon sa ligne de coupe D-D;
- la figure 4H est une vue agrandie de la moitié droite de la figure 4A;
- la figure 5 est un tableau de résultats obtenus avec les traverses des modes de réalisation ci-dessus.

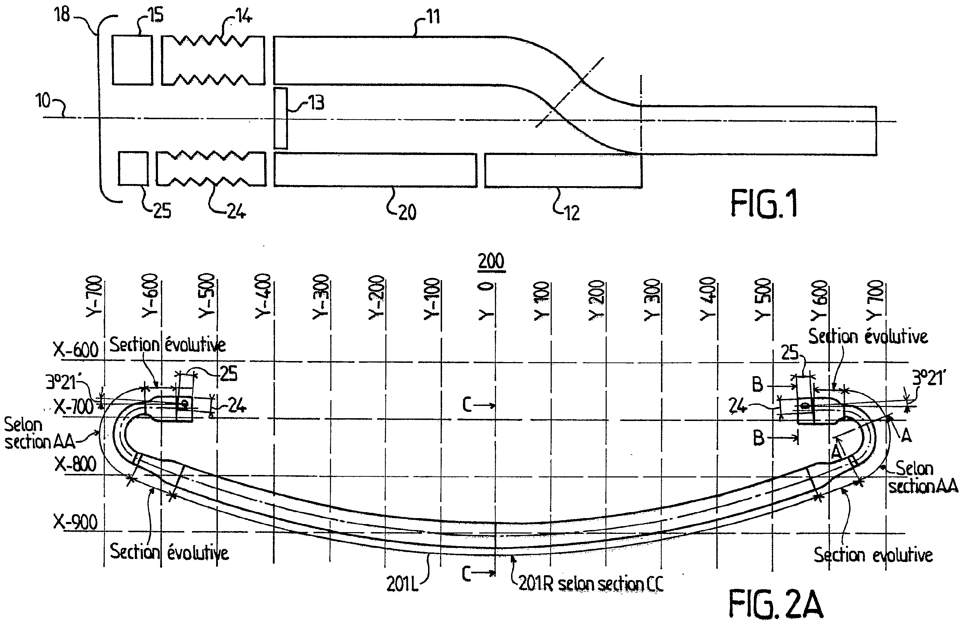

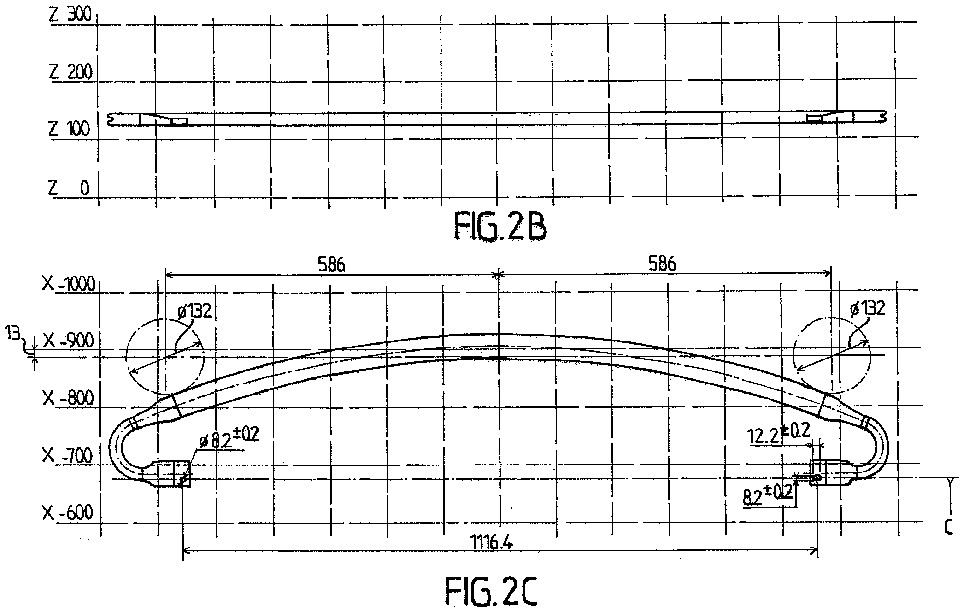

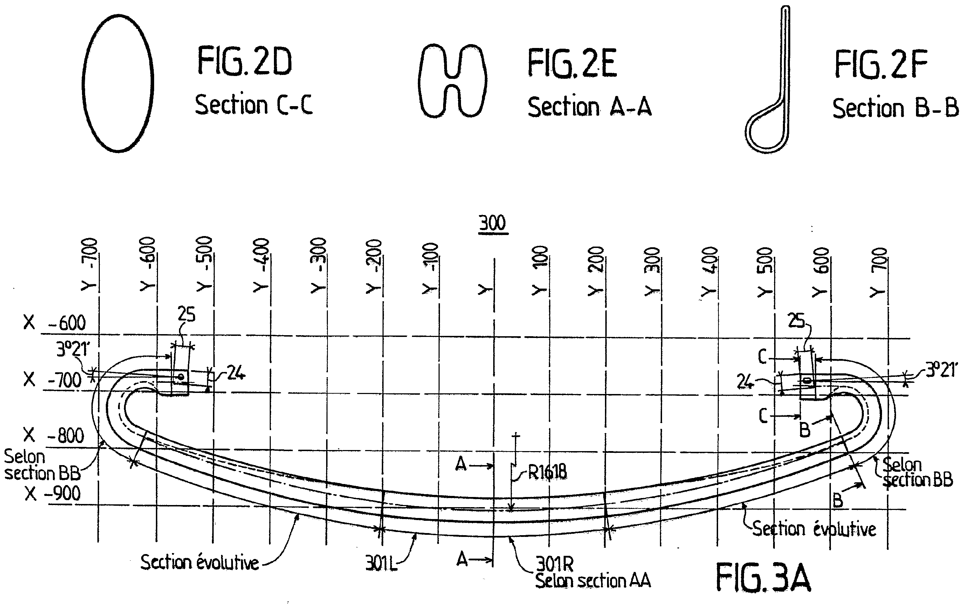

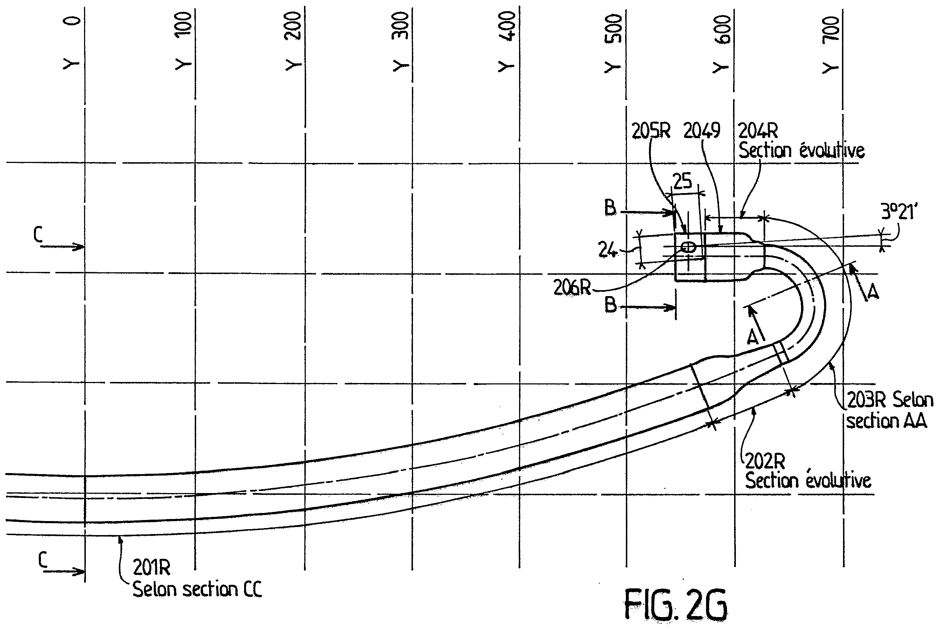

Il est précisé que l'échelle des figures 2, 3 et 4 est donnée par un quadrillage figurant sur celles-ci. Dans les vues en coupe :
- la flèche vers le haut indique une direction située dans le plan horizontal du véhicule, par exemple dans le plan des vues de dessous (figures 2A, 3A, et 4A),
- la direction perpendiculaire à ladite flèche est la verticale du véhicule, et
- l'échelle est donnée par un élément du quadrillage mis en regard.

Les dessins et autres annexes à la description comprennent des éléments de caractère certain. Ils pourront donc non seulement servir à mieux faire comprendre la description, mais aussi contribuer à la définition de l'invention, le cas échéant.

On reviendra d'abord sur les normes européennes nouvelles, découlant de la Directive 2003/102/CE du 17 novembre 2003, en particulier de son Annexe 1 section 3.

A partir du 1er Octobre 2005, tous les véhicules doivent répondre aux prescriptions techniques suivantes:
- le déplacement dynamique maximal en cisaillement du genou ne doit pas dépasser 6 mm
- l'accélération mesurée à l'extrémité supérieure du tibia ne doit pas dépasser 200 g.

A partir du 1er Septembre 2010, la seconde prescription est renforcée comme suit :
- l'accélération mesurée à l'extrémité supérieure du tibia ne doit pas dépasser 150 g.

Le groupe "European New Car Assessment Programme" ou EuroNCAP a établi une note sur le choc-piéton, intitulée "Pedestrian Testing Protocol". Il est fait référence à la version 4.1 de Mars 2004, disponible notamment sur le site www.euroncap.com. Ce document définit ce que l'on appellera ici une procédure "EuroNCAP Choc Piéton", qui prévoit d'appliquer dès maintenant la réglementation européenne de 2010.

Il est également fait référence aux travaux du European Enhanced Vehicle-safety Committee, Working Group 17 (EEVC-WG17), disponibles notamment sur le site www.eevc.org.

Selon la directive, les tests qui sont d'intérêt ici portent sur une "collision de bas de jambe factice". Il s'agit d'une collision entre la partie basse du pare-chocs et le voisinage supérieur ainsi que largement inférieur du genou.

Dans "EuroNCAP choc piéton", il a été défini un "impacteur modèle", représentant le segment de la jambe ("lower legform") qui comprend le bas de la cuisse, le genou, et la jambe au dessous du genou. Le choc de référence implique :
- un modèle d'une masse de 13,4 kg
- une vitesse de 40 km/h (11,1 m/s) et
- une énergie cinétique de 825 Joules.

Des efforts ont naturellement été menés en vue de respecter ces normes. L'une des propositions actuelles consiste à réaliser la traverse ou poutre basse de pare-chocs sous la forme d'une pluralité de structures alvéolaires de type nid d'abeille en matière synthétique, convenablement ajustées les unes aux autres. Toutefois, cette solution n'est pas totalement satisfaisante dans tous les cas.

Le contexte d'une traverse ou poutre basse de pare-chocs est par exemple celui de la Figure 1.

Cette figure 1 illustre schématiquement un exemple de réalisation de la partie avant (côté gauche) d'un véhicule, en vue de gauche. On y distingue une voie haute et une voie basse, délimitées sensiblement par le trait d'axe 10. L'avant du véhicule est à gauche de la figure. A droite, part de la caisse, au niveau du trait d'axe 10, une pièce 11 dite brancard, qui remonte pour définir la voie haute, en se terminant par un absorbeur de chocs 14 et une poutre haute de pare-chocs notée 15.

En bas, un berceau 12 est monté sur le brancard 11, de façon souple ou rigide. Ce berceau 12 se continue par une pièce 20 dite prolonge, suivie d'un absorbeur bas (piétons) 24, puis d'une poutre basse de pare-chocs notée 25. Entre les poutres 15 et 25 est défini un bouclier avant 18. De préférence, un pendard 13 relie verticalement la prolonge 20 et la partie du brancard 11 qui surplombe cette prolonge. On notera que la prolonge 20 est suspendue au brancard 11 au moyen du pendard 13. Ici, cette suspension n'est pas une liaison rigide.

Des structures semblables à la Figure 1 se trouvent par exemple dans FR-A-2 800 695 ou FR-A-2 824 523.

La description ci-après porte sur la traverse ou poutre basse 25 de la figure 1. De façon générale, la traverse proposée peut être montée notamment sur l'absorbeur 24 ou bien sur la prolonge 20, ou bien sur le pendard 13, ou bien sur le brancard 11, ou encore sur le berceau 12, selon le véhicule. Dans les modes de réalisation décrits, la traverse se monte directement sur la prolonge.

Il est ici proposé d'une part une structure particulière de la traverse, d'autre part un mode particulier d'attache de cette traverse, les deux choses étant séparables. Ici, la traverse est tenue par ses extrémités sur un élément de châssis, tel qu'une prolonge, ou autre.

Trois modes de réalisation seront décrits en référence aux Figures 2 à 4. Les traverses illustrées sont symétriques ou quasi-symétriques par rapport au plan vertical médian sur la figure. Cette symétrie permet, pour éviter d'alourdir le dessin, que les références numériques soient à chaque fois portées essentiellement sur la figure qui constitue la moitié droite de la vue de dessous

Les traverses ont en commun d'être réalisées sous la forme d'une structure tubulaire monobloc, dont la section droite est conformée sur une partie au moins de sa longueur. Sur les dessins, le trait mixte visible à l'intérieur de la traverse sur toute sa longueur représente la position de l'axe central du tube de départ. Les traits pleins figurant en section droite sur la traverse indiquent des limites de zones dans celle-ci.

### Premier mode de réalisation

Sur les figures 2, la traverse 200 présente plusieurs zones, qui diffèrent par leur conformation en section droite. Ici, la traverse possède une zone centrale, étendue sur la majeure partie de sa longueur. Les deux moitiés symétriques 201L et 201R (globalement 201) de cette zone centrale sont visibles sur la figure 2A.

Comme expliqué plus haut, il est maintenant fait référence principalement à la figure 2G. Celle-ci fait apparaître cinq zones successives, notées 201R à 205R.

La zone 201R possède ici une section droite constante, dont la forme est donnée par la vue en coupe C-C de la figure 2D. Il s'agit d'une forme d'allure ovale, dont la grande dimension est horizontale. Le rapport entre la grande dimension et la petite dimension est d'environ 2.

Plus loin, la zone 203R possède ici une section droite également constante, dont la forme est donnée par la vue en coupe A-A de la figure 2E.

Cette forme peut être décrite comme découlant de la forme de la figure 2D, par le fait que la structure tubulaire est munie de deux replis sur elle-même. Ces replis sont dirigés vers l'intérieur, radialement, selon le grand axe de l'ovale.

Entre les deux, la zone 202R est une zone de transition évolutive, dans laquelle on passe progressivement de la forme de la figure 2D à celle de la figure 2E.

Ainsi, la traverse se replie selon deux alvéoles droits opposés. Ces alvéoles sont de profondeur progressivement croissante en allant vers les extrémités de la structure tubulaire. Ici, ils s'enfoncent symétriquement.

Plus loin, il est prévu ici une autre zone de transition évolutive 204R, dans laquelle on passe progressivement de la forme de la figure 2E à une forme de base, qui peut être la forme ovale de la figure 2D. En 2049, la fin droite de la zone 204R possède une forme de surface cylindrique dont la section droite est celle de la figure 2D.

Enfin, il est prévu, dans ce mode de réalisation, une zone d'attache 205R, où le tube est écrasé horizontalement, du côté de l'arrière du pare-chocs, comme illustré sur la coupe de la figure 2F. Cette zone comprend par exemple un oeillet de fixation 206R.

L'ensemble de ces conformations peut être réalisé sur un tube, dont le diamètre nominal est ici 32 mm.

### Second mode de réalisation

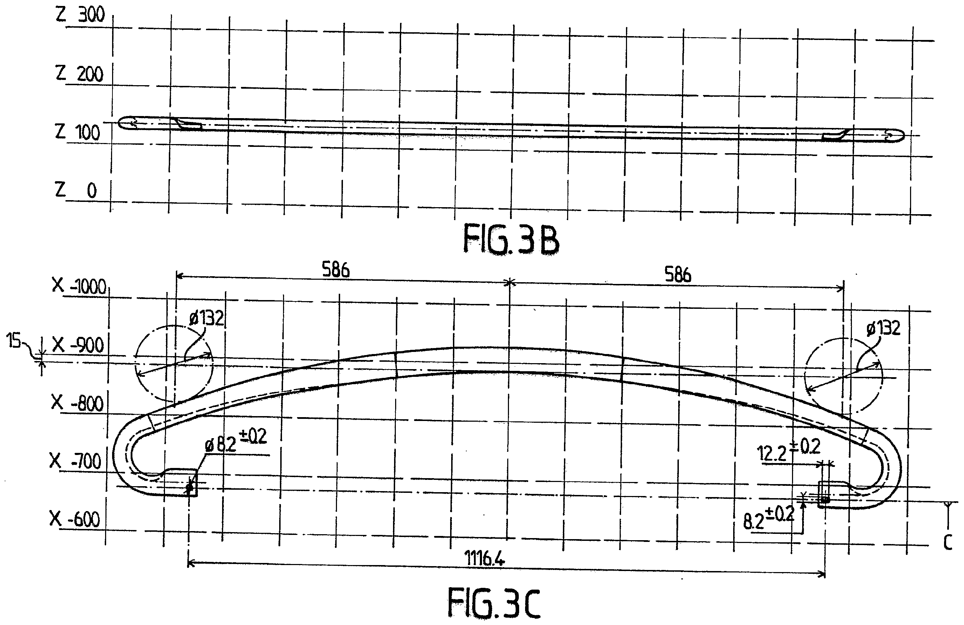

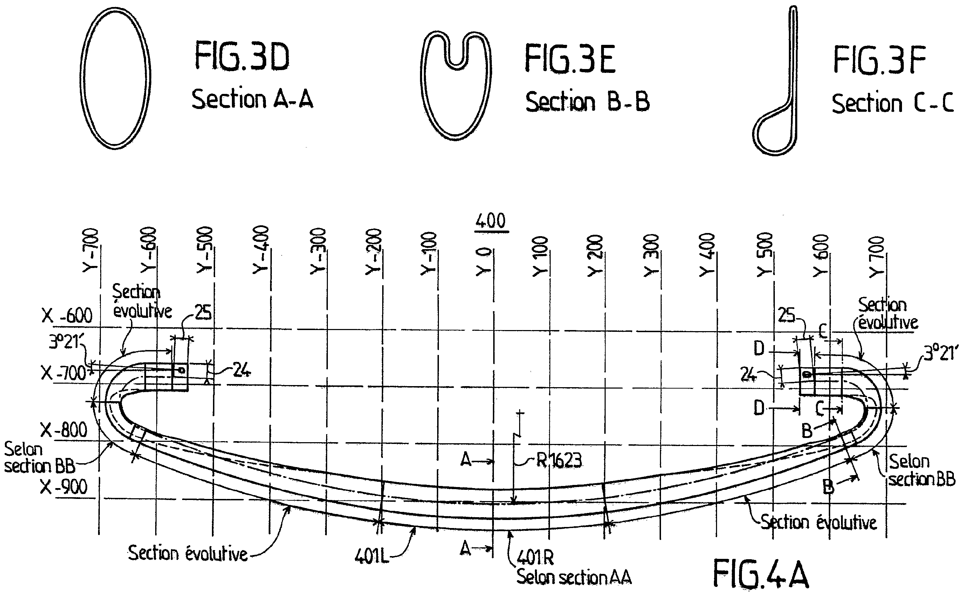

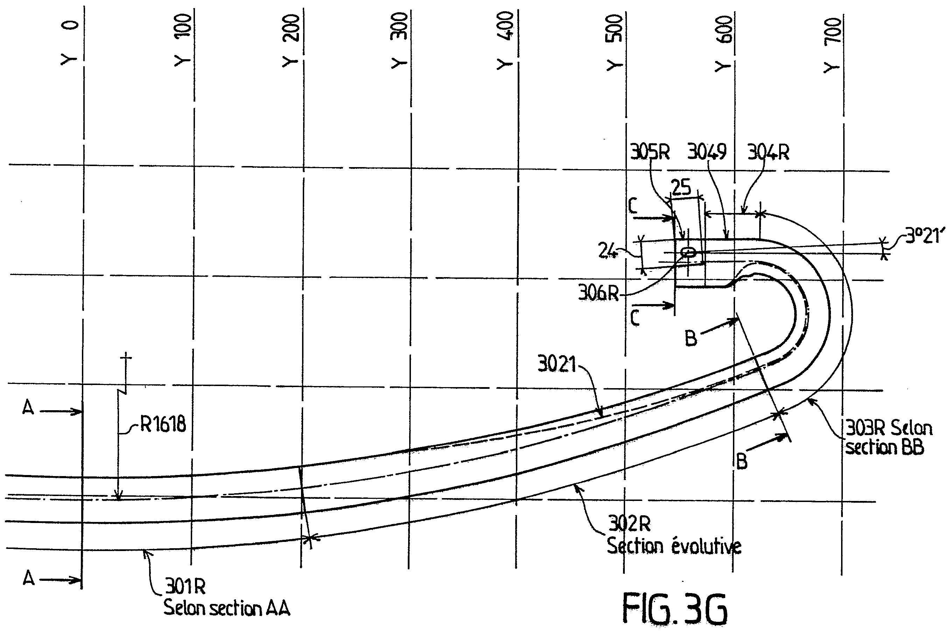

Sur les figures 3, la traverse 300 présente plusieurs zones, qui diffèrent par leur conformation en section droite. Sur la Figure 3A, on voit les deux moitiés symétriques 301L et 301R de la zone centrale (globalement 301) de la traverse. Cette zone centrale s'étend sur environ le tiers de la longueur de la traverse.

Comme expliqué plus haut, il est maintenant fait référence principalement à la figure 3G. Celle-ci fait apparaître cinq zones successives, notées 301R à 305R.

La zone 301R possède ici une section droite constante, dont la forme est donnée par la vue en coupe A-A de la figure 3D. Il s'agit d'une forme d'allure ovale, dont la grande dimension est horizontale. Le rapport entre la grande dimension et la petite dimension est d'environ 2.

Plus loin, la zone 303R possède ici une section droite également constante, dont la forme est donnée par la vue en coupe B-B de la figure 3E. Cette forme peut être décrite comme la forme de la figure 3D, munie d'un repli sur elle-même de la structure tubulaire. Ce repli est dirigé vers l'intérieur, radialement, selon le grand axe de l'ovale, du côté du châssis du véhicule.

Entre les deux, la zone 302R est une zone de transition évolutive, dans laquelle on passe progressivement de la forme de la figure 3D à celle de la figure 3E. Dans cette zone, le repli comprend un alvéole droit de profondeur progressivement croissante en allant vers les extrémités de la structure tubulaire. L'évolution de la profondeur du repli est illustrée par le trait tireté long 3021.

Plus loin, il est prévu ici une autre zone de transition évolutive 304R, dans laquelle on passe rapidement de la forme de la figure 3E à une forme de base, qui peut être la forme ovale de la figure 3D. On distingue en 3049 une courte fin droite de la zone 304R, qui possède une forme de surface cylindrique dont la section droite est celle de la figure 3D.

Enfin, il est prévu, dans ce mode de réalisation, une zone d'attache 305R, où le tube est écrasé horizontalement, du côté du châssis, comme illustré sur la coupe de la figure 3F. Cette zone comprend par exemple un oeillet de fixation 306R.

L'ensemble de ces conformations peut être réalisé sur un tube, dont le diamètre nominal est ici 32 mm.

### Troisième mode de réalisation

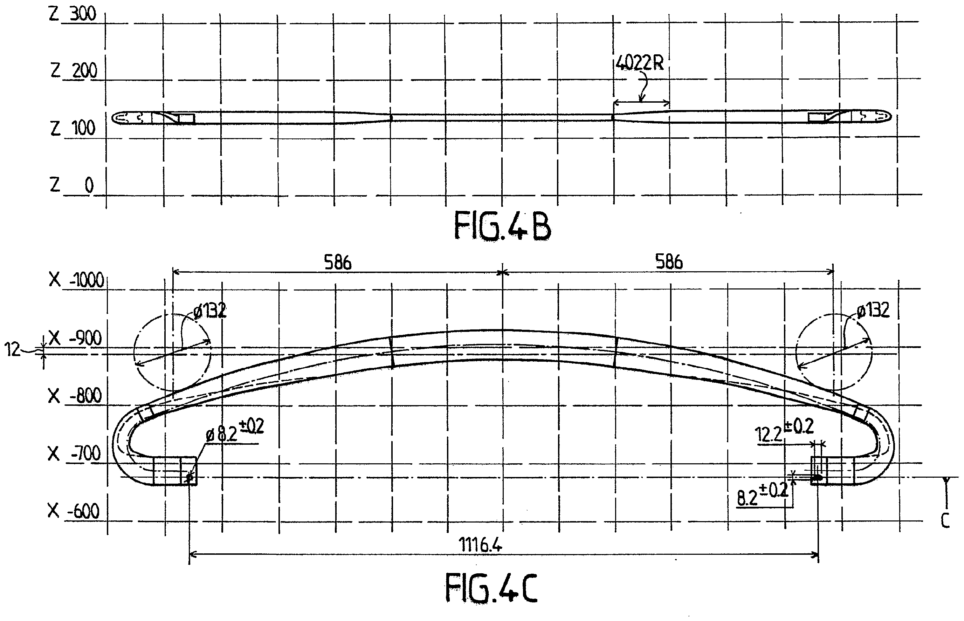

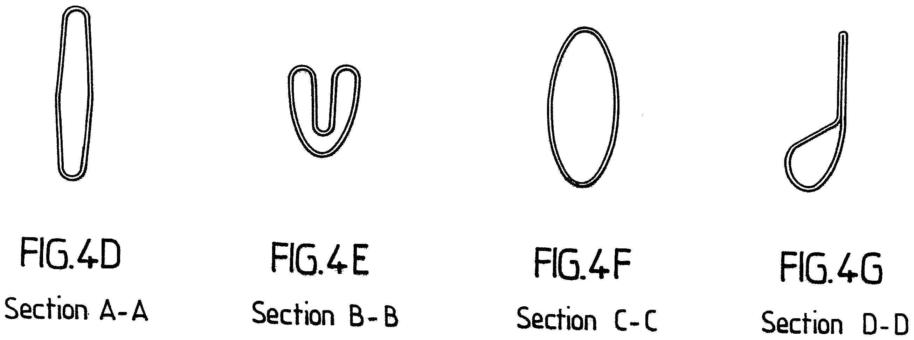

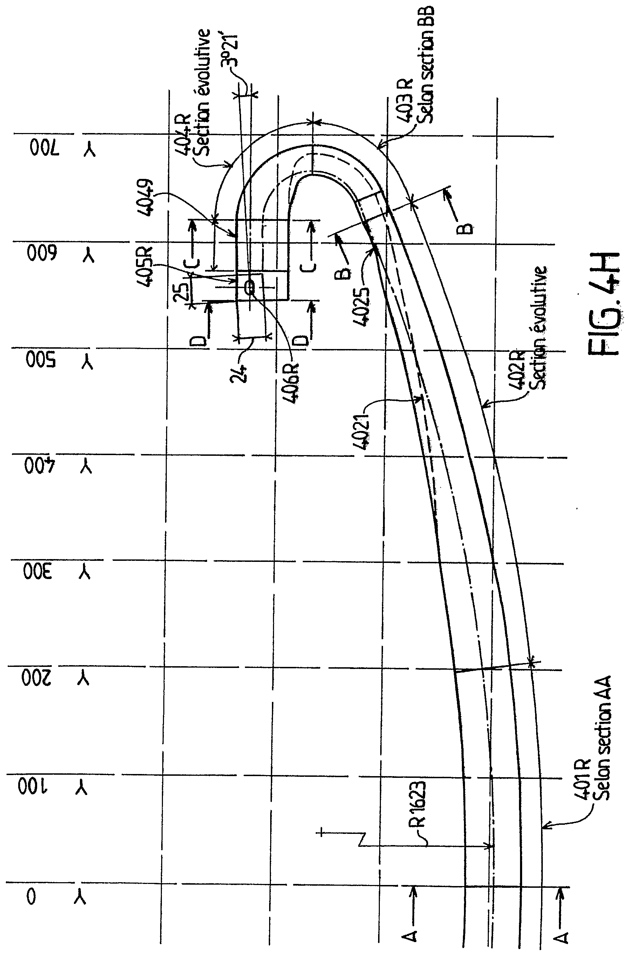

Sur les figures 4, la traverse 400 présente plusieurs zones, qui diffèrent par leur conformation en section droite. Sur la Figure 4A, on voit les deux moitiés symétriques 401L et 401R de la zone centrale (globalement 401) de la traverse. Cette zone centrale s'étend sur environ le tiers de la longueur de la traverse.

Comme précédemment, il est maintenant fait référence principalement à la figure 4H. Celle-ci fait apparaître cinq zones successives, notées 401R à 405R.

La zone 401R possède ici une section droite constante, dont la forme est donnée par la vue en coupe A-A de la figure 4D. Il s'agit d'une forme d'allure ovale, ou losange à coins arrondis, très aplatie, dont la grande dimension est horizontale. Le rapport entre la grande dimension et la petite dimension est ici d'environ 6.

Plus loin, la zone 403R possède ici une section droite également constante, dont la forme est donnée par la vue en coupe B-B de la figure 4E. Cette forme peut être décrite comme une forme ovale, fortement repliée sur elle-même. En effet, le profil externe (enveloppe) de la figure 4E se superpose bien à la forme de la figure 4F. L'enveloppe de cette forme ovale est nettement moins aplatie que la forme de la figure 4D.

Le repli est dirigé vers l'intérieur, radialement, selon le grand axe de l'ovale, du côté du châssis. Il s'étend largement à l'intérieur de l'ovale, presque aux trois quarts. Ici, l'espace interne entre le repli et le contour extérieur est sensiblement constant. On note aussi que cet espace interne est d'une taille proche de celle de la petite dimension de la forme de la figure 4D.

Entre les deux, la zone 402R est une zone de transition évolutive, dans laquelle on passe progressivement de la forme de la figure 4D à celle de la figure 4E. Dans cette zone, le repli comprend un alvéole droit de profondeur progressivement croissante en allant vers les extrémités de la structure tubulaire. L'évolution de la profondeur du repli est illustrée par le trait tireté long 4021. La diminution de l'aplatissement de la forme enveloppe ovale est visible en 4022R sur la Figure 4B. La figure 4H montre également un léger renfoncement 4025, à la fin de la zone évolutive, au voisinage du droit de l'attache.

Plus loin, il est prévu ici une autre zone de transition évolutive 404R, dans laquelle on passe rapidement de la forme de la figure 4E à une forme de base, qui est ici la forme ovale de la Figure 4F. Dans celle-ci, on retrouve un rapport entre la grande dimension et la petite dimension qui est d'environ 2. En 4049, la fin droite de la zone 404R possède une forme de surface cylindrique dont la section droite est celle de la figure 4F.

Enfin, il est prévu, dans ce mode de réalisation, une zone d'attache 405R, où le tube est écrasé horizontalement, du côté du châssis, comme illustré sur la coupe de la figure 4G. Cette zone comprend par exemple un oeillet de fixation 406R.

L'ensemble de ces conformations peut être réalisé sur un tube, dont le diamètre nominal est ici 34 mm.

### Tests

Les trois modes de réalisation décrits ci-dessus ont donné des résultats prometteurs lors de tests de choc-piéton.

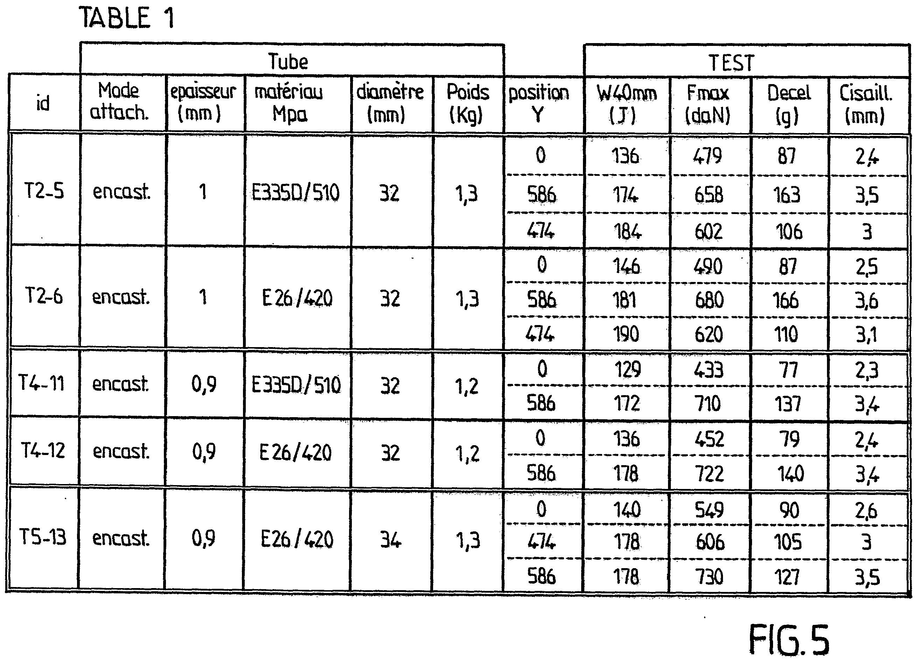

Les résultats de ces tests apparaissent dans le tableau 1 de la Figure 5. Les six premières colonnes du tableau 1 définissent la traverse :
- la première colonne est un identifiant de traverse, suivi d'un identifiant de test ;
- la seconde colonne indique le mode d'attache des extrémités de la traverse, ici un encastrement dans tous les cas ;
- les quatre colonnes suivantes indiquent respectivement l'épaisseur, la matière, le diamètre extérieur du tube initial, et son poids.

Quant aux identifiants de traverse et de test :
- la traverse des figures 2, notée T2, a été testée selon deux réalisations T2-5 etT2-6, différant par le matériau ;
- la traverse des figures 3, notée T4, a été également testée selon deux réalisations T4-11 etT4-12, différant par le matériau ;
- la traverse des figures 4, notée T5, a été testée à ce jour selon une seule réalisation T5-13.

Quant à la matière, les symboles E335D/510 et E26/420 indiquent deux nuances d'acier. Le chiffre après la barre oblique indique la limite élastique.

Les tests ont été conduits systématiquement en deux positions :
- au centre (Y =0)
- au bord (Y=586), pratiquement au droit de la fixation.

On observera à cet égard que les crosses se replient vers l'arrière en débordant par rapport à l'emprise de l'avant du châssis du véhicule.

Les tests des traverses T2 et T5 ont également été conduits en un point intermédiaire (Y=474), situé à peu près aux quatre cinquièmes de la demi-longueur utile de la traverse. Par longueur utile, on entend la partie de la traverse sujette à un choc piéton lorsque le véhicule avance.

Les quatre colonnes de droite indiquent respectivement :

| | |
|---|---|
| - en "W40mm" | énergie absorbée par la traverse, pour une course inférieure à 40mm, en Joules (J). Il est souhaité une valeur d'au moins 140 joules. |
| - en "Fmax" | la valeur de crête de l'effort de contact, non filtré, avec l'impacteur, en décaNewton (daN). Il est souhaité de ne pas dépasser environ 700 daN, sur une course au moins égale à 40 mm. |
| - en "Decel" | la décélération subie par l'impacteur, mesurée à l'extrémité supérieure du tibia. L'unité de mesure est l'accélération terrestre (g). Il est prévu de rester sous la limite de 200 g, qui deviendra 150 g à partir du 1er Septembre 2010. |
| - en "Cisaill." | le déplacement dynamique maximal en cisaillement du genou. Il est prévu de rester sous la limite de 6 mm. |

Les grandeurs des deux dernières colonnes correspondent directement à la norme "EuroNCAP choc piéton". Les deux autres grandeurs ont été définies en conséquence.

L'examen des deux dernières colonnes montre que :
- dans tous les cas, la traverse satisfait la norme applicable au 1er octobre 2005 ;
- la traverse satisfait également, ou est très près de satisfaire, la norme applicable au 1er septembre 2010.

L'examen des deux colonnes précédentes montre que les valeurs souhaitées sont sensiblement respectées.

En conséquence, il apparaît que les solutions proposées sont particulièrement efficaces pour résoudre un problème mécaniquement difficile, tout en présentant le grand avantage d'offrir une structure monobloc relativement simple.

La Demanderesse est arrivée à ces solutions par tâtonnement, parmi d'autres essais qui ont donné des résultats insatisfaisants. Il apparaît *a posteriori* qu'elle s'est appuyée notamment sur les principes suivants :
- conformer le tube formant la traverse selon une section constante dans sa partie centrale, de part et d'autre de Y=0.
- diminuer ensuite l'inertie lorsque l'on s'approche des extrémités. Il s'agit de l'inertie de flexion selon un seul axe (l'axe perpendiculaire au mouvement du véhicule) dans un plan vertical.
- choisir un matériau ayant une limite élastique appropriée.

Le tâtonnement a porté notamment sur les conformations propres à adapter convenablement l'inertie.

Les modes de réalisation précités montrent que :
- il est possible de donner une étendue plus ou moins grande à la zone centrale de section constante (201,301,401).
   En effet, la demi-longueur de celle-ci va d'environ 560 mm (traverse T2) à environ 200 mm (traverses T4 et T5)
- à partir du centre, la première zone de transition évolutive peut être brève (202), ou étendue (302,402).
- le ou les replis peuvent s'étendre assez largement dans la zone de crosse.
- la zone de crosse peut être de section constante (203, 303) ou bien partiellement évolutive (403+404).
- près de l'attache, il peut être prévu une zone cylindrique courte (3049), ou plus étendue (2049,4049).
- la zone finale de section droite constante peut être d'orientation sensiblement perpendiculaire à l'axe du véhicule (et au plan général de symétrie de la traverse).
- des modifications locales peuvent être effectuées, comme en 4025 (Fig 4H).

Par ailleurs, dans les traverses 200 et 300, le repli intervient sensiblement sans modification de l'enveloppe de la section droite telle qu'elle se présente dans la partie centrale de la structure tubulaire. Par contre, dans la traverse 400, le repli intervient sur une section droite dont le rapport entre la dimension maximum et la dimension minimum diminue lorsque l'on va vers les extrémités.

Bien entendu, les modes de réalisation décrits ne sont pas limitatifs, ni sur les dimensions du tube de base, ni dans ses conformations. On peut notamment utiliser différentes autres combinaisons des caractéristiques décrites et/ou résumées ci-dessus. Il n'est pas exclu que certaines parties de la traverse conservent la section droite originelle du tube. D'autre part, la traverse n'est pas nécessairement totalement symétrique. De plus, cinq zones sont définies dans les traverses décrites en détail. Mais le nombre de zones peut être inférieur, ou supérieur.

De même, le mode de fixation indiqué, à savoir encastrement sur des prolonges, n'est nullement limitatif.

La conformation voulue du tube peut être réalisée à la presse et/ou par frappe à froid, avec le nombre de passes requis.

Les exemples de matériaux donnés ne sont pas limitatifs. D'autres nuances d'aciers, ou des compositions d'aluminium, peuvent convenir.

Par ailleurs, l'invention a été décrite pour une traverse basse de pare-chocs avant. Avec des adaptations convenables, elle peut s'appliquer à d'autres endroits du véhicule, notamment comme traverse haute, ou intermédiaire, ou encore comme élément d'un pare-chocs arrière, ou de protection latérale, là où des chocs peuvent se produire à vitesse significative avec des corps fragiles.

Dans les traverses décrites, la structure tubulaire est arquée, sa convexité étant tournée vers l'avant. Cependant, une structure droite (hors les crosses) est également envisageable. La traverse peut également avoir une structure courbe dans l'espace.

## Revendications

1. Traverse de pare-chocs (200; 300; 400) pour véhicule automobile, destinée à être tenue par ses extrémités sur des éléments de châssis, tels que des prolonges, essentiellement constituée d'une structure tubulaire dont la section droite est conformée sur une partie au moins de sa longueur, cette conformation comprenant, à partir de positions choisies situées de part et d'autre de sa partie centrale, un repli sur elle-même de la structure tubulaire, lequel repli s'accentue lorsque l'on va vers les extrémités (202; 302; 402), **caractérisée en ce que**, dans sa partie centrale (201; 301; 401), la structure tubulaire est aplatie selon une section droite d'allure ovale dont le rapport entre la dimension maximum et la dimension minimum est compris entre environ 2 et environ 6.

2. Traverse selon la revendication 1,
**caractérisée en ce que** le rapport entre la dimension maximum et la dimension minimum de la section droite d'allure ovale est d'environ 2 (201; 301).

3. Traverse selon la revendication 1,
**caractérisée en ce que** le rapport entre la dimension maximum et la dimension minimum de la section droite d'allure ovale est d'environ 6 (401).

4. Traverse selon l'une des revendications précédentes,
**caractérisée en ce que** le repli comprend un alvéole droit de profondeur progressivement croissante en allant vers les extrémités de la structure tubulaire (Figs. 2E, 3E, 4E).

5. Traverse selon la revendication 4, **caractérisée en ce que** l'ouverture de l'alvéole est tournée vers le châssis du véhicule.

6. Traverse selon la revendication 4, **caractérisée en ce que** le repli comprend deux alvéoles droits s'enfonçant symétriquement (Fig. 2E).

7. Traverse selon l'une des revendications précédentes,
**caractérisée en ce que** le repli intervient sensiblement sans modification de l'enveloppe de la section droite telle qu'elle se présente dans la partie centrale de la structure tubulaire (201 ; 301).

8. Traverse selon l'une des revendications 1 à 6,
**caractérisée en ce que** le repli intervient sur une section droite dont le rapport entre la dimension maximum et la dimension minimum diminue lorsque l'on va vers les extrémités (401).

9. Traverse selon l'une des revendications 1 à 6, **caractérisée en ce que** la structure tubulaire est arquée, sa convexité étant tournée vers l'avant.

10. Traverse selon l'une des revendications précédentes, **caractérisée en ce que** les extrémités de la structure tubulaire s'étendent selon deux crosses respectives repliées vers l'arrière en débordant par rapport à l'emprise de l'avant du châssis du véhicule.

11. Traverse selon la revendication 10, **caractérisée en ce que** le repli s'étend sur une partie au moins desdites crosses.

12. Traverse selon la revendication 11, **caractérisée en ce que** le repli s'étend de manière évolutive sur une partie au moins desdites crosses.

13. Traverse selon l'une des revendications 10 à 12, **caractérisée en ce que** les crosses comprennent une zone finale de section droite constante.

14. Traverse selon la revendication 13, **caractérisée en ce que** la zone finale de section droite constante est d'orientation sensiblement perpendiculaire à l'axe du véhicule.

15. Traverse selon l'une des revendications 10 à 14, **caractérisée en ce que** les extrémités des crosses sont agencées pour assurer la liaison avec les éléments de châssis.

## Patentansprüche

1. Stoßfängerquerträger (200; 300; 400) für Automobilfahrzeuge, dazu bestimmt, an seinen Enden auf Elementen des Fahrzeugaufbaus, wie Verlängerungen, befestigt zu werden, im Wesentlichen gebildet aus einer Rohrstruktur, deren Querschnitt auf einem Teil mindestens ihrer Länge ausgebildet ist, wobei diese Ausbildung, ausgehend von beidseitig ihres Mittelteils gelegenen gewählten Positionen, eine Faltung um sich selbst der Rohrstruktur umfasst, diese Faltung zu den Enden (202; 302; 402) hin stärker ausgeprägt ist, **dadurch gekennzeichnet, dass** die Rohrstruktur in ihrem Mittelteil (201; 301; 401) in einem oval geformten Querschnitt abgeflacht ist, dessen Verhältnis zwischen der maximalen Abmessung und der minimalen Abmessung zwischen ungefähr 2 und ungefähr 6 liegt.

2. Querträger nach Anspruch 1, **dadurch gekennzeichnet, dass** das Verhältnis zwischen der maximalen Abmessung und der minimalen Abmessung des oval geformten Querschnitts ungefähr 2 ist (201; 301).

3. Querträger nach Anspruch 1, **dadurch gekennzeichnet, dass** das Verhältnis zwischen der maximalen Abmessung und der minimalen Abmessung des oval geformten Querschnitts ungefähr 6 ist (401).

4. Querträger nach einem der vorstehenden Ansprüche, **dadurch gekennzeichnet, dass** die Faltung eine gerade Aushöhlung von fortschreitend zunehmender Tiefe in Richtung hin zu den Enden der Rohrstruktur umfasst (Abb. 2E, 3D, 4E).

5. Querträger nach Anspruch 4, **dadurch gekennzeichnet, dass** die Öffnung der Aushöhlung zum Fahrgestell des Fahrzeugs hin gedreht ist.

6. Querträger nach Anspruch 4, **dadurch gekennzeichnet, dass** die Faltung zwei gerade Aushöhlungen umfasst, die sich symmetrisch vertiefen (Abb. 2 E).

7. Querträger nach einem der vorstehenden Ansprüche, **dadurch gekennzeichnet, dass** die Faltung im Wesentlichen ohne Änderung der Hülle des Querschnitts auftritt, so wie sie im Mittelteil der Rohrstruktur (201; 301) vorliegt.

8. Querträger nach einem der Ansprüche 1bis 6, **dadurch gekennzeichnet, dass** die Faltung bei einem Querschnitt auftritt, dessen Verhältnis zwischen der maximalen Abmessung und der minimalen Abmessung in Richtung hin zu den Enden abnimmt (401).

9. Querträger nach einem der Ansprüche 1 bis 6, **dadurch gekennzeichnet, dass** die Rohrstruktur gebogen ist, wobei ihre Konvexität nach vorn gedreht ist.

10. Querträger nach einem der vorstehenden Ansprüche, **dadurch gekennzeichnet, dass** die Enden der Rohrstruktur sich in zwei jeweiligen Endstücken erstrecken, die nach hinten gefaltet sind, wobei sie in Bezug auf die Grundfläche der Vorderseite des Fahrzeugaufbaus hinausragen.

11. Querträger nach Anspruch 10, **dadurch gekennzeichnet, dass** sich die Faltung auf mindestens einen Teil der besagten Endstücke erstreckt.

12. Querträger nach Anspruch 11, **dadurch gekennzeichnet, dass** sich die Faltung evolutiv auf mindestens einen Teil der besagten Endstücke erstreckt.

13. Querträger nach einem der Ansprüche 10 bis 12, **dadurch gekennzeichnet, dass** die Endstücke einen Endbereich von konstanter gerader Strecke umfassen.

14. Querträger nach Anspruch 13, **dadurch gekennzeichnet, dass** der Endbereich von konstanter gerader Strecke im Wesentlichen senkrecht zur Achse des Fahrzeugs ausgerichtet ist.

15. Querträger nach einem der Ansprüche 10 bis 14, **dadurch gekennzeichnet, dass** die Enden der Endstücke so angeordnet sind, um die Verbindung mit den Elementen des Fahrzeugaufbaus sicherzustellen.

## Claims

1. Bumper beam (200; 300; 400) for a motor vehicle, intended to be held by its ends on chassis elements, such as extensions, which bumper beam is composed substantially of a tubular structure the cross-section of which is shaped over at least a portion of its length, the shaping comprising, starting from chosen positions situated on either side of its central portion, a fold of the tubular structure in on itself, which fold becomes more pronounced towards the ends (202; 302; 402), **characterised in that**, in its central portion (201; 301; 401), the tubular structure is flattened according to a cross-section of oval shape, of which the ratio between the maximum dimension and the minimum dimension is between approximately 2 and approximately 6.

2. Beam according to claim 1,
**characterised in that** the ratio between the maximum dimension and the minimum dimension of the cross-section of oval shape is approximately 2 (201; 301).

3. Beam according to claim 1,
**characterised in that** the ratio between the maximum dimension and the minimum dimension of the cross-section of oval shape is approximately 6 (401).

4. Beam according to any one of the preceding claims,
**characterised in that** the fold comprises a straight void having a depth which increases progressively towards the ends of the tubular structure (Figs. 2E, 3E, 4E).

5. Beam according to claim 4, **characterised in that** the opening of the void faces towards the chassis of the vehicle.

6. Beam according to claim 4, **characterised in that** the fold comprises two straight voids which are sunk towards each other symmetrically (Fig. 2E).

7. Beam according to any one of the preceding claims,
**characterised in that** the fold is obtained substantially without modifying the envelope of the cross-section as it is in the central portion of the tubular structure (201; 301).

8. Beam according to any one of claims 1 to 6,
**characterised in that** the fold is obtained over a cross-section of which the ratio between the maximum dimension and the minimum dimension decreases towards the ends (401).

9. Beam according to any one of claims 1 to 6, **characterised in that** the tubular structure is curved, its convexity facing towards the front.

10. Beam according to any one of the preceding claims, **characterised in that** the ends of the tubular structure extend according to two curved portions which are folded backwards and protrude relative to the footprint of the front of the chassis of the vehicle.

11. Beam according to claim 10, **characterised in that** the fold extends over at least a portion of said curved portions.

12. Beam according to claim 11, **characterised in that** the fold extends in an evolving manner over at least a portion of said curved portions.

13. Beam according to any one of claims 10 to 12, **characterised in that** the curved portions comprise an end zone of constant cross-section.

14. Beam according to claim 13, **characterised in that** the end zone of constant cross-section is oriented substantially perpendicularly to the axis of the vehicle.

15. Beam according to any one of claims 10 to 14, **characterised in that** the ends of the curved portions are arranged to provide the connection with the chassis elements.
